# EUROPÄISCHE PATENTANMELDUNG

(11) **EP 4 480 353 A1**
(43) Veröffentlichungstag der Anmeldung: **25.12.2024**
(21) Anmeldenummer: 23180210.9
(22) Anmeldetag: 20.06.2023
(51) Int. Cl.: A47G 19/02, A01K 5/01, F16B 47/00

(54) **FIXIERBARER BEHÄLTER ZUR AUFNAHME VON ESSEN**

(71) Anmelder: LIINI GmbH, 4532 Feldbrunnen (CH)
(72) Erfinder: Roth, Mike, 4523 Feldbrunnen (CH)
(74) Vertreter: Braunpat AG

(57) **Zusammenfassung**

Ein Behälter (1) zur Aufnahme von Essen, insbesondere ein Babyteller, umfassend einen Behälterkörper (2) mit einem Aufnahmebereich (10) für Essen, eine an der Unterseite des Behälterkörpers (2) verbindbare und verformbare Bodenplatte (30), welche mit dem Behälterkörper (2) einen Hohlraum (40) begrenzt, eine Platte (34), welche an der Bodenplatte (30) aufgenommen ist und an welcher mittig ein Stift (36) angeordnet ist, der durch eine Bohrung im Behälterkörper (2) führbar ist, und einen Hebel (20), der mit dem Stift (36) verbindbar und an dem Behälterkörper (2) verschwenkbar angeordneten ist, wobei der Hebel (20) in eine ausgeklappte Position und eine eingeklappte Position schwenkbar ist, und wobei durch Schwenkbewegung des Hebels (20) in die eingeklappte Position ein Vakuum an der Unterseite des Behälters (1) durch die Verformung der Bodenplatte (30) erzeugbar ist.

## Beschreibung

### Technisches Gebiet der Erfindung

Die vorliegende Erfindung bezieht sich auf einen fixierbaren Behälter zur Aufnahme von Essen. Dieser fixierbare Behälter ist insbesondere als Essteller für Babys und Kleinkinder geeignet, kann aber auch in anderen Bereichen eingesetzt werden, in denen es gewünscht ist, dass der Behälter lösbar auf einem Untergrund fixierbar ist.

### Stand der Technik

Babys und Kleinkinder haben zunächst nur begrenzte motorische Fähigkeiten, so dass es beim Essen immer wieder zu unkoordinierten Bewegungen kommt, wobei der mit Essen gefüllte Behälter bzw. Teller verschoben, umgeworfen wird und/oder auf den Boden fällt.

So sind neben rutschfesten Unterlagen seit längerem Babyteller mit einer gummierten Unterseite, z.B. ein entsprechender Silikonring, oder Babyteller mit einem oder mehreren Saugnäpfen aus Gummi an der Unterseite bekannt, welche diesen auf dem Tisch festsaugen und auch bei entsprechendem Rütteln festhalten.

Allerdings gewährleisten diese Typen von Babytellern über ihre Lebensdauer nicht die geforderte Standfestigkeit. Insbesondere Babyteller mit einem Saugnapf-System sind nur über eine verhältnismässig kurze Zeitspanne unverrückbar platzierbar. Ferner hat sich erwiesen, dass die von dem Saugnapf-System erzeugbare Saugwirkung ein vertikales Abheben verhindert, aber weniger gut geeignet ist, ein horizontales Verschieben zu verhindern.

Nach einer gewissen Nutzung können insbesondere aus Silikon hergestellte Babyteller einen unangenehmen Geruch verströmen, welcher auch auf das darin präsentierte Essen übergehen kann.

### Zusammenfassung der Erfindung

Demnach ist es Aufgabe der vorliegenden Erfindung einen Behälter zur Aufnahme von Essen, insbesondere einen Babyteller vorzusehen, welcher einen sicheren Stand auf einer Unterlage bereitstellt. Ferner wird ein entsprechender Behälter vorgesehen, der hinsichtlich des Materials neben Festigkeit und Haltbarkeit auch in ökologischer Hinsicht vorteilhaft und nachhaltig ist.

Gelöst werden die Aufgaben durch einen Behälter zur Aufnahme von Essen, insbesondere ein Babyteller, gemäss Anspruch 1. Vorteilhafte Ausgestaltungen und Weiterbildungen der Erfindung ergeben sich aus den abhängigen Ansprüchen.

Wesentlich bei der erfindungsgemässen Lösung ist es, dass der Behälter zur Aufnahme von Essen, bzw. ein Babyteller, mittels eines erzeugbaren Vakuums an Ort und Stelle auf einer Unterlage fixierbar ist. Dies verhindert sicher, dass das Baby oder Kleinkind oder eventuell auch Senioren den Behälter verschiebt, umkippt oder sogar von der Unterlage entfernt. Aber auch für Senioren kann ein derartiger Teller geeignet sein, insbesondere wenn die motorischen und/oder sensorischen Fähigkeiten eingeschränkt sind. Der Behälter ist demnach geeignet zur Versorgung von Menschen mit Bewegungsstörungen, Epilepsie, Parkinson, Tourette-Syndrom etc.

Die Erfindung bezieht sich auf einen Behälter zur Aufnahme von Essen, insbesondere ein Babyteller, umfassend
- einen Behälterkörper mit einem Aufnahmebereich für Essen,
- eine an der Unterseite des Behälterkörpers verbindbare und verformbare Bodenplatte aus einem elastischen Material, welche mit dem Behälterkörper einen Hohlraum begrenzt,
- eine Platte, welche an der Bodenplatte aufgenommen und an welcher mittig ein Stift angeordnet ist, der durch eine Bohrung im Behälterkörper führbar ist, und
- einen Hebel, der mit dem Stift verbindbar und an dem Behälterkörper verschwenkbar angeordneten ist, wobei der Hebel in eine ausgeklappte Position und eine eingeklappte Position schwenkbar ist, und wobei durch Schwenkbewegung des Hebels in die eingeklappte Position ein Vakuum an der Unterseite des Behälters durch Verformung der Bodenplatte erzeugbar ist.

Der Behälter kann auch als Essteller bezeichnet werden und ist standsicher auf einem glatten Untergrund, z.B. die lackierte oder lasierte glatte Oberfläche eines Esstischs, mittels des erzeugbaren Vakuums sicher platzierbar. Somit wird eine stabile Essensumgebung für das Baby oder Kleinkind bereitgestellt. Ferner können sich Eltern darauf verlassen, dass während der Mahlzeit der Essteller an Ort und Stelle verbleibt. Die Essensumgebung bleibt deutlich sauberer, so dass der Reinigungsaufwand minimiert ist.

Der Behälter ist derart dimensioniert, dass Nahrungsmittel darin gut aufnehmbar sind. Hierfür umfasst der Behälter einen Behälterkörper mit einem Aufnahmebereich mit einer Tiefe von mindestens 20 mm, so dass sichergestellt ist, dass das Essen im Teller verbleibt.

Der Aufnahmebereich des Behälterkörpers kann durch Trennwände in ein bzw. vorzugsweise in mehrere Zonen unterteilt sein, in welche unterschiedliche Nahrungsmittel aufnehmbar sind. So wird ein Vermischen von Nahrungsmitteln verhindert und sichergestellt, dass beispielsweise ein Baby oder Kleinkind stets eine ausgewogene Mahlzeit erhält. Eine Aufteilung in drei Zonen ist vorteilhaft, in welchen jeweils Gemüse, Getreide, Milchprodukte oder Fisch/Fleisch einfüllbar sind. Ferner erlaubt die Aufteilung eine Portionierung der einzelnen Lebensmittelgruppen entsprechend des Bedarfs für ein Baby, Kleinkind oder auch Senioren.

Um darüber hinaus die Verletzungsgefahr zu reduzieren kann der Behälter eine ergonomische Form haben, insbesondere bei einer rechteckigen oder quadratischen Form mit abgerundeten Ecken.

Gemäss der Erfindung ist ein Vakuum zwischen Behälter und Untergrund erzeugbar. Durch Verschwenken des Hebels, welcher mit einer an der Unterseite des Behälterkörpers vorgesehenen verformbaren Bodenplatte aus einem elastischen Material, bzw. mit einer in der Bodenplatte integral aufnehmbaren Platte über den Stift verbindbar ist, kann ein starkes Vakuum erzeugt werden. Hierbei wird beim Verschwenken des Hebels aus der ausgeklappten Position in die eingeklappte Position, die Platte und die damit verbundene Bodenplatte aus einem elastischen Material teilweise vom Untergrund abgehoben, d.h. nach oben in den vorhandenen Hohlraum gezogen. Durch das Abheben der Platte wird die elastische Bodenplatte verformt, vom Untergrund teilweise abgehoben und es entsteht ein Vakuum. Das Vakuum ist lösbar, in dem der Hebel aus der eingeklappten Position in die ausgeklappte Position verschwenkt wird. Dabei wird die Platte via den mit der Platte verbundenen Stift und einem zwischen Unterseite des Behälterkörpers und der Bodenplatte angeordneten Federelement in dem Hohlraum nach unten zurück in seine Ausgangsposition gedrückt.

Der Hebel erlaubt demnach eine einfache Bedienung des Behälters. Insbesondere kann das erzeugbare Vakuum auf einfache Weise erneut aufgebaut werden, in dem der Hebel nach einem Lösen erneut umgekippt wird. So bietet der Babyteller auch über eine längere Dauer einen starken Halt.

Aus Sicherheitsgründen kann der Hebel in der eingeklappten Position bündig im Behälter aufgenommen sein, insbesondere in einer Vertiefung, welche der Form des Hebels angepasst in einem der Trennwände des Behälterkörpers ausgebildet ist. Der Hebel kann ferner in der eingeklappten und in der Vertiefung aufgenommenen Position mittels Magnetkraft vor einem unbeabsichtigten Verschwenken gesichert werden. Hierbei kann in der Vertiefung ein Magnet angeordnet sein, welcher mit einem Gegenmagneten an einer Unterseite des Hebels in Wechselwirkung treten kann. Um den Hebel aus der Vertiefung in die ausgeklappte Position verschwenken zu können, kann eine entsprechende Vertiefung am Rand des Behälters vorgesehen sein, so dass ein Endbereich des Hebels gut zu greifen ist. Der Hebel kann als Aluminiumgussteil ausgebildet sein.

Die Bodenplatte des Behälters kann aus Silikon oder einem anderen geeigneten elastischen Kunststoff gefertigt sein und ist an die Form des Behälterkörpers angepasst, vorzugsweise in einer rechteckigen bzw. quadratischen Form. Bei der bevorzugten Verwendung von Silikon kann dieses Material mit unterschiedlichen Härtegraden eingesetzt werden, welche die Flexibilität des Behälters beeinflussen. Die Bodenplatte kann eine umlaufende Dichtlippe aufweisen, welche in eine entsprechend geformte Nut, ausgebildet umlaufend an der Unterseite des Behälterkörpers, einführbar ist. Durch diese Verrastung der Dichtlippe in der entsprechenden Nut wird ein Verdrehen der Bodenplatte relativ zum Behälterkörper verhindert. Ferner verhindert diese Dichtung, dass Nahrungsmittel in den Hohlraum gelangen und die Hygiene beeinträchtigen.

In einer Ausführungsform ist die Platte als Aluminiumplatte, alternativ aus Stahl oder einem geeigneten Kunststoff ausgebildet und integral, vorzugsweise formschlüssig, in der Bodenplatte aufgenommen. So kann beispielsweise die Platte beim Giessen der Bodenplatte oder durch Auftragen von Materialschichten der Bodenplatte um die Platte aufgenommen werden. Die Platte kann gegebenenfalls eine rechteckige oder quadratische Form haben und kann kleiner oder gleich dimensioniert sein wie die Bodenplatte.

In einer weiteren Ausführungsform ist an dem Stift, welcher an der Platte anordenbar und durch eine Bohrung in dem Behälterkörper führbar ist, ein Federelement, z.B. ausgebildet als Spannfeder, angeordnet. Das Federelement stützt sich zwischen der Unterseite des Behälterkörpers und der Bodenplatte ab, so dass der Hebel stets nach unten Richtung Bodenplatte gezogen ist. Dies verhindert ein Wackeln des Hebels und sorgt für eine stabile Handhabung des Hebels.

Der von der Platte mittig vorstehende Stift, kann insbesondere eine rechteckige Grundform haben. Zur Verankerung des Stifts mit dem Hebel bzw. mit dem Behälter ist beispielsweise ein Querbolzen einsetzbar.

Für Baby- und/oder Kindergeschirr gelten hohe Sicherheitsstandards, um sicherzustellen, dass keine schädlichen Stoffe verwendet werden. Gemäss einer Ausführungsform der Erfindung kann der Behälter zur Aufnahme von Essen aus einem umweltfreundlichen Material gefertigt sein, welches weniger Kunststoff verwendet bzw. einen Teil des Kunststoffs durch ein natürliches Material ersetzt und diesen Sicherheitsstandards genügt. Hier haben sich Weizenstrohfasern sowohl in ökologischer als auch in ästhetischer Sicht als besonders geeignet erwiesen, die mit Kunstharz gemischt ein ökologisches Material mit guten Festigkeits- und Haltbarkeitseigenschaften bereitstellt. Alternative Materialien sind solche, welche die geforderten Sicherheits- und Hygienestandards erfüllen, und für ein Injektionsverfahren geeignet sind.

Ferner ist der erfindungsgemässe Behälter leicht auch im zusammengebauten Zustand zu reinigen und insbesondere spülmaschinenfest.

Weitere Einzelheiten der Erfindung gehen aus der nun folgenden Beschreibung der bevorzugten Ausführungsform des Behälters zur Aufnahme von Essen hervor, welche in den beiliegenden Zeichnungen beispielhaft dargestellt sind. Aus der Beschreibung lassen sich weitere Vorteile der vorliegenden Erfindung entnehmen, sowie Anregungen und Vorschläge, wie der Erfindungsgegenstand im Rahmen des Beanspruchten abgeändert oder auch weiterentwickelt werden kann.

### Kurzbeschreibung der Zeichnungen

Das Ausführungsbeispiel der Erfindung wird nachfolgende anhand der Zeichnungen näher erläutert. Es zeigen:
Figur 1 eine schematische, perspektivische Darstellung eines erfindungsgemässen Behälters zur Aufnahme von Essen mit einem ausgeklappten Hebel;
Figur 2 eine schematische Seitenansicht des Behälters;
Figur 3 eine schematische, perspektivische Darstellung des Behälters mit einem eingeklappten Hebel;
Figur 4 eine schematische, perspektivische Schnittdarstellung des Behälters mit eingeklapptem Hebel.

### Bevorzugte Ausführungsformen der Erfindung

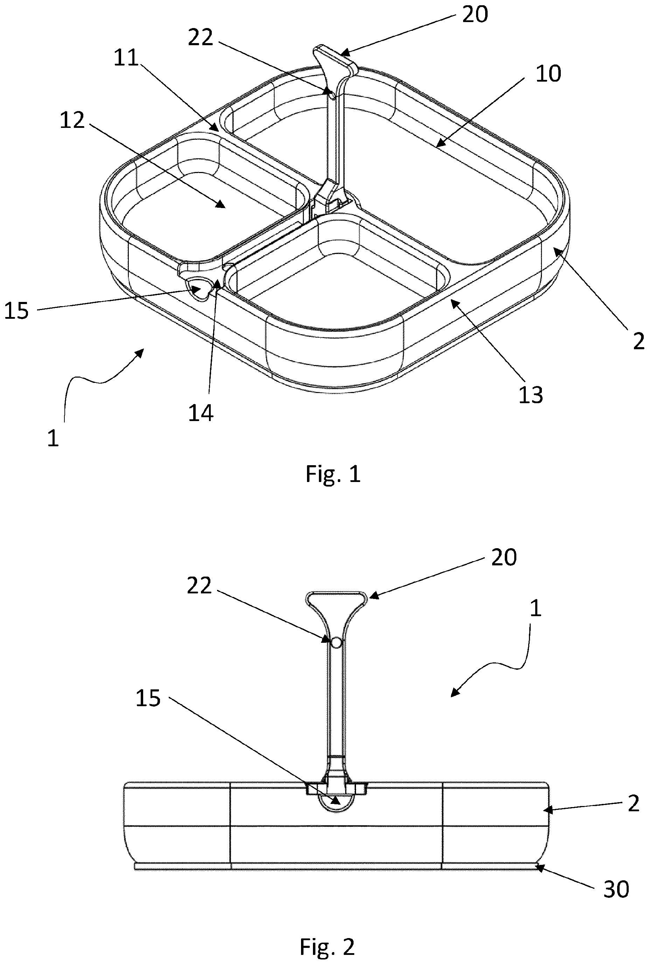

In Figur 1 ist schematische in einer perspektivischen Darstellung ein Behälter 1 zur Aufnahme von Essen dargestellt, welcher auch als Babyteller oder Essteller bezeichnet ist. Der Behälter 1 umfasst einen Behälterkörper 2 mit einem Aufnahmebereich 10, welcher konfiguriert ist, um Nahrungsmittel darin aufzunehmen. In dem dargestellten Ausführungsbeispiel ist der Aufnahmebereich 10 mittels Trennwänden 11 in einzelne Zonen 12 unterteilt. Diese Zonen 12 erlauben eine Trennung von unterschiedlichen Lebensmittelgruppen, welche für eine ausgewogene Ernährung erforderlich sind. Da eine Vermischung mit der Aufteilung verhindert ist, ist ein guter Überblick möglich, welche der Lebensmittelgruppen eventuell noch nicht gegessen worden sind.

In der gezeigten Darstellung hat der Behälter 1 sowie der Behälterkörper 2 eine quadratische Form. Allerdings sind andere Form ebenfalls möglich, beispielsweise rund, oval oder auch einer von einem Kleinkind erkennbaren.

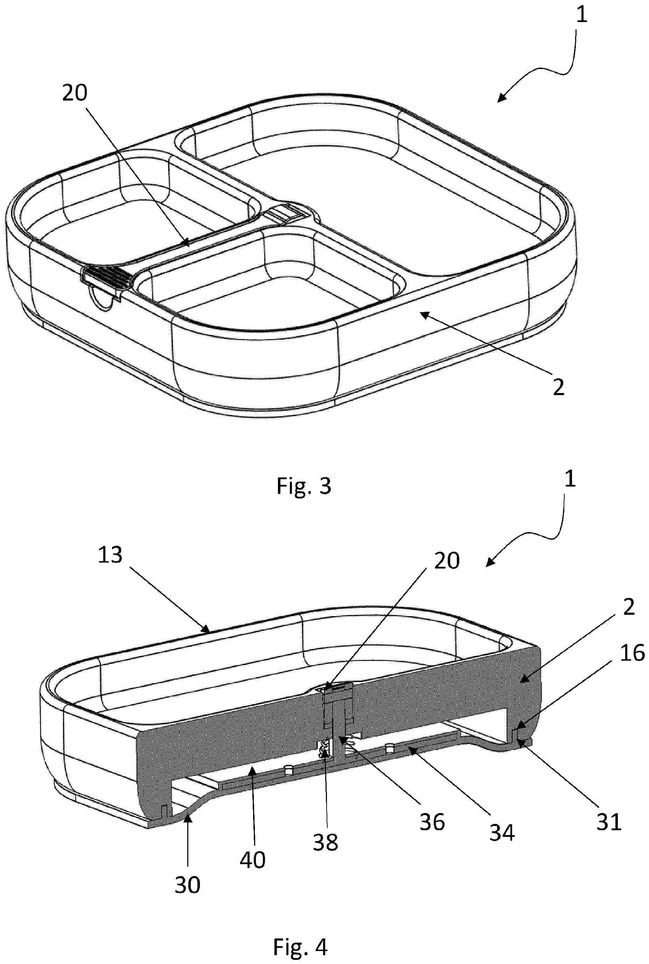

Mittig des Behälters 1 erstreckt sich ein Hebel 20, welcher an dem Behälterkörper 2 schwenkbar angeordnet ist. Demnach kann der Hebel 20 von der dargestellten ausgeklappten Position in eine eingeklappte Position verschwenkt werden. In der eingeklappten Position kann wie in Fig. 3 dargestellt der Hebel 20 in einer Vertiefung 14, ausgebildet in einer der Trennwände 11, bündig aufgenommen sein. An einem Randbereich 13 des Behälterkörpers 2 ist in dem Bereich der Vertiefung 14 eine Aussparung 15 vorgesehen, welche ein einfaches Ergreifen des eingeklappten Hebels 20 erlaubt. Ferner ist an dem Hebel 20 ein magnetisches Element 22 vorgesehen, welches mit einem entsprechend in der Vertiefung 14 positionierten Gegenmagnet eine lösbare magnetische Verbindung in eingeklappter Position des Hebels 20 bereitstellt.

Figur 2 zeigt eine schematische Seitenansicht des Behälters 1 mit dem Hebel 20 in der ausgeklappten Position. Erkennbar ist, dass an der Unterseite des Behälterkörpers 2 eine verformbare Bodenplatte 30 vorgesehen ist. Die Bodenplatte 30 ist vorzugsweise lösbar mittels einer dichtenden Rastverbindung mit dem Behälterkörper 2 verbindbar.

Figur 3 stellt den Behälter 1 mit dem Hebel 20 in seiner eingeklappten Position dar. In dieser eingeklappten Position des Hebels 20 ist der Behälter 1 rutschfest auf einer Unterlage, z.B. einer Tischplatte, aufgestellt. Dies wird erreicht durch das Erzeugen eines Vakuums, wirkend zwischen Untergrund und Behälter 1. Das Vakuum wird durch einen Mechanismus erzeugt, der neben dem Hebel 20 einen mit diesen verbundenen Stift 36, beispielsweise mit einem runden Querschnitt, und einer in der Bodenplatte 30 integrierten Platte 34 umfasst, wie dies nachfolgend erläutert wird.

Die Figur 4 zeigt eine schematische und perspektivische Schnittdarstellung des Behälters 1. An der Unterseite des Behälterkörpers 2 ist die verformbare Bodenplatte 30 angeordnet. An der Bodenplatte 30 ist umlaufend eine Dichtlippe 31 ausgebildet, welche in eine an der Unterseite des Behälterkörpers 2 ausgebildeten umlaufenden Nut 16 dichtend aufnehmbar ist. Ferner ist in die verformbare bzw. elastische Bodenplatte 30 eine Platte 34 eingegossen, von welcher sich von einer Mitte der Stift 36 erstreckt. Das freie Ende des Stifts 36 ist mit dem Hebel 20 lösbar verbindbar, wobei sich eine Schwenkbewegung des Hebels 20 in eine vertikale Bewegung des Stiftes 36 und damit der Platte 34 überträgt. Gleichzeitig mit der Schwenkbewegung des Hebels 20 wird die elastische Bodenplatte 30 zumindest teilweise von der Unterlage abgehoben und damit die Bodenplatte 30 sowie die Platte 34 in einen von der Bodenplatte 30 und einer Unterseite des Behälterkörpers 2 sowie dem Randbereich 13 begrenzten Hohlraum 40 bewegt bzw. hochgezogen. Demnach ist bei eingeklapptem Hebel 20 die Platte 34 nach oben gezogen und die Bodenplatte 30 verformt. Damit bildet sich zwischen Behälter 1 und Unterlage ein Vakuum aus. Wird der Hebel 20 in die ausgeklappte Position verschwenkt, wird die Platte 34 nach unten gedrückt, das Vakuum wird aufgehoben und der Behälter 1 kann von der Unterlage abgehoben werden.

Um den Stift 36 ist ein Federelement 38 angeordnet, welches sich einerseits gegen die Unterseite des Behälterkörpers 2 und andererseits gegen die Platte 34 abstützt. Mittels des Federelements 38 wird bewirkt, dass die Bodenplatte 30 zurück in ihre Ausgangsposition bringbar ist und dass der Hebel 20 permanent zumindest leicht Richtung Platte 34 gezogen wird, so dass die Stabilität des Hebels 20 verbessert und die Verbindung zwischen Stift 36 und Hebel 20 gefestigt ist.

## Patentansprüche

1. Ein Behälter (1) zur Aufnahme von Essen, insbesondere ein Babyteller, umfassend
- einen Behälterkörper (2) mit einem Aufnahmebereich (10) für Essen,
- eine an der Unterseite des Behälterkörpers (2) verbindbare und verformbare Bodenplatte (30), welche mit dem Behälterkörper (2) einen Hohlraum (40) begrenzt,
- eine Platte (34), welche an der Bodenplatte (30) aufgenommen und an welcher mittig ein Stift (36) angeordnet ist, der durch eine Bohrung im Behälterkörper (2) führbar ist, und
- einen Hebel (20), der mit dem Stift (36) verbindbar und an dem Behälterkörper (2) verschwenkbar angeordneten ist, wobei der Hebel (20) in eine ausgeklappte Position und eine eingeklappte Position schwenkbar ist, und wobei durch Schwenkbewegung des Hebels (20) in die eingeklappte Position ein Vakuum an der Unterseite des Behälters (1) durch die Verformung der Bodenplatte (30) erzeugbar ist.

2. Der Behälter (1) nach Anspruch 1, **dadurch gekennzeichnet, dass** der Aufnahmebereich (10) durch Trennwände (11) in mehrere Zonen (12) unterteilt ist, in welchen jeweils unterschiedliche Nahrungsmittel entsprechend einem Bedarf für Baby, Kleinkind und/oder Senior aufnehmbar sind.

3. Der Behälter (1) nach Anspruch 2, **dadurch gekennzeichnet, dass** der Hebel (20) in der eingeklappten Position eine in einer der Trennwände (11) ausgebildeten Vertiefung (14) bündig aufnehmbar ist.

4. Der Behälter (1) nach einem der Ansprüche 1 bis 3, **dadurch gekennzeichnet, dass** der Hebel (20) mittels Magnetkraft in der eingeklappten Position haltbar ist.

5. Der Behälter (1) nach einem der Ansprüche 1 bis 4, **dadurch gekennzeichnet, dass** die Bodenplatte (30) aus Silikon gefertigt ist und eine umlaufende Dichtlippe (31) aufweist, welche in einer entsprechend ausgebildeten Nut (16) an der Unterseite des Behälterkörpers (2) aufnehmbar ist.

6. Der Behälter (1) nach einem der Ansprüche 1 bis 5, **dadurch gekennzeichnet, dass** die Platte (34) aus Aluminium gefertigt und in die Bodenplatte (30) formschlüssig integriert ist.

7. Der Behälter (1) nach einem der Ansprüche 1 bis 6, **dadurch gekennzeichnet, dass** ein Federelement (38) den Stift (36) umgibt und mit einem Ende an der Platte (34) und mit dem anderen Ende an dem Behälterkörper (2) anliegt, wobei der Hebel (20) permanent nach unten gezogen wird.

8. Der Behälter (1) nach einem der Ansprüche 1 bis 7, **dadurch gekennzeichnet, dass** der Behälterkörper (2) aus einem Material mit einem Kunststoffanteil und einem natürlichen Materialanteil, beispielsweise Weizenstrohfasern, gefertigt ist.

9. Der Behälter (1) nach einem der Ansprüche 1 bis 8, **dadurch gekennzeichnet, dass** er im Zusammenbau spülmaschinenfest ist.

10. Der Behälter (1) nach einem der Ansprüche 1 bis 9, **dadurch gekennzeichnet, dass** der Aufnahmebereich (10) mindestens eine Tiefe von 20 mm aufweist.
